# EUROPEAN PATENT APPLICATION

(11) **EP 4 430 958 A1**
(43) Date of publication of application: **18.09.2024**
(21) Application number: 22892813.1
(22) Date of filing: 09.11.2022
(51) Int. Cl.: A23L 29/00, A23J 3/00, A23J 3/14, A23L 5/00, A23L 13/00, A23L 13/40, A23L 33/185

(54) **DIGESTIBILITY ENHANCER FOR COMPOSITION CONTAINING BOTANICAL PROTEIN**

(30) Priority: 09.11.2021 JP 2021182521; 07.04.2022 JP 2022063829
(71) Applicant: Amano Enzyme Inc., Nagoya-shi Aichi 460-8630 (JP)
(72) Inventor: SAKAI, Kiyota, Kakamigahara-shi, Gifu 509-0109 (JP)
(74) Representative: Müller-Boré & Partner Patentanwälte PartG mbB
(86) International application number: PCT/JP2022/041703
(87) International publication number: WO 2023/085315

(57) **Abstract**

The purpose of the present invention is to provide a composition containing a plant protein having improved digestibility. A protein deamidase according to the present invention can be used as an active ingredient for a digestibility enhancer for the composition containing a plant protein in order to improve the digestibility of the composition containing a plant protein.

## Description

### TECHNICAL FIELD

The present invention relates to a processing technique that enhances digestibility of a plant protein-containing composition.

### BACKGROUND ART

Protein is one of the important nutrients as a component that makes a body. Efficiency of protein intake is synonymous with efficiency of digestion to amino acids. That is, efficient digestion is essential to effectively incorporate proteins into the body.

It is predicted that the world population will reach 9.7 billion in 2050, and it is feared that the future protein demand will exceed the supply (protein crisis). Under such circumstances, a movement of replacing animal proteins by plant proteins with less environmental burden is increasingly accelerated.

On the other hand, plant proteins are known to be inferior in digestibility to animal proteins (Non-Patent Document 1), and a gap between food intake and nutrient absorption is also a problem.

### PRIOR ART DOCUMENT

### NON-PATENT DOCUMENT

Non-Patent Document 1: Journal of Japanese Society of Food and Nutrition, Vol. 20, No. 4, p. 259-266

### SUMMARY OF THE INVENTION

### PROBLEMS TO BE SOLVED BY THE INVENTION

Therefore, an object of the present invention is to provide a plant protein-containing composition having enhanced digestibility.

### MEANS FOR SOLVING THE PROBLEM

As a result of intensive studies, the present inventor has found that by performing a treatment for allowing a protein deamidase to act on a plant protein material, digestibility of a resulting plant protein-containing food is enhanced. The present invention has been completed by further conducting studies based on this finding.

In other words, the present invention provides inventions of the following modes.

Item 1. A digestibility enhancer for a plant protein-containing composition, the digestibility enhancer including a protein deamidase.

Item 2. The digestibility enhancer for a plant protein-containing composition according to item 1, which is used for enhancing a release amount of essential amino acids.

Item 3. The digestibility enhancer for a plant protein-containing composition according to item 1 or 2, which is used for enhancing a release amount of branched amino acids.

Item 4. The digestibility enhancer for a plant protein-containing composition according to any one of items 1 to 3, in which the protein deamidase is a protein glutaminase.

Item 5. The digestibility enhancer for a plant protein-containing composition according to any one of items 1 to 4, in which the plant protein is a protein of a plant selected from the group consisting of pulse crops, cereal crops, and seeds.

Item 6. A method for enhancing digestibility of a plant protein-containing composition, the method including a step of allowing a protein deamidase to act on a plant protein-containing composition.

Item 7. A method for enhancing a release amount of essential amino acids of a plant protein-containing composition, the method including a step of allowing a protein deamidase to act on a plant protein-containing composition.

Item 8. A method for enhancing a release amount of branched amino acids of a plant protein-containing composition, the method including a step of allowing a protein deamidase to act on a plant protein-containing composition.

Item 9. A method for producing a processed plant protein-containing composition having enhanced protein digestibility, the method including a step of allowing a protein deamidase to act on a plant protein-containing composition.

Item 10. A processed plant protein-containing composition having enhanced protein digestibility, which is obtained by a method including a step of allowing a protein deamidase to act on a plant protein-containing composition.

### ADVANTAGES OF THE INVENTION

According to the present invention, a plant protein-containing composition having enhanced digestibility is provided.

### EMBODIMENTS OF THE INVENTION

### 1. Digestibility enhancer for plant protein-containing composition

A digestibility enhancer for a plant protein-containing composition of the present invention includes a protein deamidase.

### 1-1. Application

The digestibility enhancer for a plant protein-containing composition of the present invention is used for an application in which digestibility of a plant protein contained in the composition is enhanced. In the present invention, enhancing digestibility refers to increasing an amount of amino acids that can be released under a digestion environment of a protein. The digestion environment of a protein is specifically the stomach and/or small intestine. The enhancement in digestibility can be confirmed by the fact that an amount of released amino acids is increased as compared with the case where a protein deamidase is not used (that is, when the plant protein-containing composition is treated under the same conditions except that a protein deamidase is not used). More specifically, the enhancement in digestibility can be confirmed by digesting a test sample by subjecting the test sample to an environment simulating the stomach (under temperature conditions corresponding to body temperature in an artificial gastric juice) and/or an environment simulating the inside of the small intestine (under temperature conditions corresponding to body temperature in an artificial intestinal juice) for a predetermined time, and measuring an amount of free amino nitrogen after digestion, or an amount of free amino nitrogen and a residue weight after digestion. It can be evaluated that the digestibility is higher as the amount of free amino nitrogen is larger and the residue weight is smaller after digestion within a predetermined time.

The digestibility enhancer for a plant protein-containing composition of the present invention can also be used for an application in which an amount of essential amino acids is further increased (that is, a release amount of essential amino acids is enhanced) than an amount of non-essential amino acids among amino acids released under the digestion environment. The enhancement in the release amount of essential amino acids can be confirmed by the fact that a ratio of the amount of released essential amino acids to the amount of released non-essential amino acids is enhanced as compared with the case where a protein deamidase is not used (that is, when the plant protein-containing composition is treated under the same conditions except that a protein deamidase is not used).

The digestibility enhancer for a plant protein-containing composition of the present invention can also be used for an application in which an amount of branched amino acids is increased (that is, a release amount of branched amino acids is enhanced) among amino acids released under the digestion environment. The enhancement in the release amount of branched amino acids can be confirmed by the fact that an amount of released branched amino acids is enhanced as compared with the case where a protein deamidase is not used (that is, when the plant protein-containing composition is treated under the same conditions except that a protein deamidase is not used).

A plant protein-containing composition to which the plant protein-containing composition of the present invention is applied, and a specific method of use will be described in detail in "2. Method for enhancing digestibility of plant protein-containing composition, method for enhancing release amount of essential amino acids, and method for enhancing release amount of branched amino acids".

### 1-2. Protein deamidase

The protein deamidase is an active ingredient that contributes to enhancement in digestibility, preferably enhancement in the release amount of essential amino acids and/or the release amount of branched amino acids in addition to the enhancement in digestibility, for the digestibility enhancer for a plant protein-containing composition of the present invention. The type, origin, and the like of the protein deamidase are not particularly limited as long as the enzyme exhibits an action of decomposing an amide group-containing side chain of a protein without cleaving a peptide bond and crosslinking the protein. Examples of the protein deamidase include a protein deamidase derived from the genus Chryseobacterium, the genus Flavobacterium, the genus Empedobacter, the genus Sphingobacterium, the genus Aureobacterium, or the genus Myroides, which is disclosed in Japanese Patent Laid-open Publication No. 2000-50887, Japanese Patent Laid-open Publication No. 2001-218590, or International Publication No. 2006/075772. These protein deamidases may be used singly or in combination of two or more kinds thereof.

Examples of the protein deamidase include a protein glutaminase and a protein asparaginase, and in a broad sense, a protein arginine deiminase is also included. Among these protein deamidases, a protein glutaminase is preferable from the viewpoint of further enhancing digestibility, the release amount of essential amino acids, and/or the release amount of branched amino acids.

Among these protein deamidases, a protein deamidase derived from the genus Chryseobacterium is more preferable, a protein glutaminase derived from the genus Chryseobacterium is still more preferable, and a protein glutaminase derived from Chryseobacterium proteolyticum sp. is yet more preferable, from the viewpoint of further enhancing digestibility, the release amount of essential amino acids, and/or the release amount of branched amino acids.

The protein deamidase can be prepared from a culture solution of a microorganism from which the above protein deamidase is derived. Specific examples of the preparation method include a method for recovering a protein deamidase from a culture solution or bacterial cells of the above microorganism. For example, in the case of using a microorganism that secretes protein deamidase, after bacterial cells are recovered from the culture solution in advance by filtration, centrifugation, or the like as necessary, the enzyme can be separated and/or purified. In addition, in the case of using a microorganism that does not secrete protein deamidase, after bacterial cells are recovered from the culture solution in advance as necessary, the bacterial cells are disrupted by pressurization treatment, ultrasonic treatment, or the like to expose the enzyme, and then the enzyme can be separated and/or purified. As the enzyme separation and/or purification method, a known protein separation and/or purification method can be used without particular limitation, and examples thereof include a centrifugal separation method, a UF concentration method, a salting-out method, and various chromatography methods using an ion exchange resin and the like. The separated and/or purified enzyme can be powdered by a drying method such as freeze-drying or reduced-pressure drying, and can also be powdered using an appropriate excipient and/or drying aid in the drying method. The separated and/or purified enzyme can also be liquefied by adding an appropriate additive and subjecting the enzyme to filtration sterilization.

As the protein deamidase, a commercially available product can also be used, and examples of a preferable commercially available product include a protein glutaminase "Amano" 500 derived from Chryseobacterium proteolyticum sp. manufactured by Amano Enzyme Inc.

### 1-3. Other components

The digestibility enhancer for a plant protein-containing composition of the present invention may or may not contain, as components other than the protein deamidase, an additive and/or a base that are/is formulary acceptable for an enzyme preparation. Examples of such additives and bases include an excipient, a buffer, an antioxidant, an ultraviolet inhibitor, a preservative, an antiseptic, a pH adjusting agent, a dispersant, an emulsifier, a solubilizing agent, a carrier, and a solvent (water or the like). These additives and bases may be used singly or in combination of two or more kinds thereof. In addition, the contents of these additives and bases may be appropriately set according to the type and/or preparation form of these components.

### 1-4. Properties

The properties of the digestibility enhancer for a plant protein-containing composition of the present invention is not particularly limited, and examples thereof include powdered, fine-grained, granular dry preparations, and liquid preparations.

### 2. Method for enhancing digestibility of plant protein-containing composition, method for enhancing release amount of essential amino acids, and method for enhancing release amount of branched amino acids

As described above, the protein deamidase contributes to enhancement in digestibility of the plant protein-containing composition, preferably enhancement in the release amount of essential amino acids and/or enhancement in the release amount of branched amino acids in addition to the enhancement in digestibility. Therefore, the present invention further provides a method for enhancing digestibility of a plant protein-containing composition, the method including a step of allowing a protein deamidase to act on a plant protein-containing composition; a method for enhancing a release amount of essential amino acids of a plant protein-containing composition, the method including a step of allowing a protein deamidase to act on a plant protein-containing composition; and a method for enhancing a release amount of branched amino acids of a plant protein-containing composition, the method including a step of allowing a protein deamidase to act on a plant protein-containing composition (hereinafter, these methods are also collectively referred to as a "method for enhancing digestibility of a plant protein-containing composition, and the like").

In these methods for enhancing digestibility of a plant protein-containing composition, and the like of the present invention, the "enhancement in digestibility", the "enhancement in the release amount of essential amino acids", the "enhancement in the release amount of branched amino acids", and the "protein deamidase" are as described in detail in the above "1. Digestibility enhancer for plant protein-containing composition".

### 2-1. Step of allowing protein deamidase to act on plant protein-containing composition

In the step of allowing a protein deamidase to act on a plant protein-containing composition, appropriately, a plant protein mixture containing a plant protein-containing composition and a protein deamidase is prepared, and a treatment for allowing an enzymatic reaction to proceed is performed.

### 2-1-1. Plant protein-containing composition

The plant protein-containing composition to which the digestibility enhancer for a plant protein-containing composition of the present invention is applied is not particularly limited as long as the plant protein-containing composition contains a plant protein and is in a form that can be ingested by a living body.

### 2-1-1-1. Plant protein

The plant protein is not particularly limited as long as its origin is a plant, but examples thereof include pulse crops such as soy, pea, lentil, chickpea, black bean, broad bean, mung bean, lupini bean, and kidney bean; cereal crops such as wheat, barley, oat, sorghum, rice, rye, buckwheat, Japanese barnyard millet, foxtail millet, teff, quinoa, corn, and potato; seeds such as almond, coconut, peanut, cashew nut, hazelnut, pecan nut, macadamia nut, pistachio, walnut, Brazil nut, pili nut, chestnut, sesame, pine nut, hemp seed (industrial hemp), chia seed, chia, amaranthus, canary seed, and linseed; and natural proteins contained in algae. In addition, since the plant protein in the present invention may be any protein derived from a plant, the plant protein may be, in addition to the above natural protein, a protein that the above natural protein is chemically partially decomposed with an acid, an alkali, or the like, a protein that the above natural protein is enzymatically partially decomposed with a protease or the like, or a protein that the above natural protein is chemically modified with various reagents, or a protein obtained by artificial peptide synthesis.

In the present invention, the above plant proteins may be used singly or in combination of two or more kinds thereof.

Among the above pulse crops, soy, pea, lentil, chickpea, broad bean, and mung bean are preferable, soy, chickpea, and mung bean are more preferable, and mung bean is further preferable, from the viewpoint of further enhancing digestibility. Among the above cereal crops, wheat, oat, rice, and corn are preferable, wheat, rice, and corn are more preferable, wheat and corn are still more preferable, and wheat is yet more preferable, from the viewpoint of further enhancing digestibility. Among the above seeds, almond, coconut, hemp seed (industrial hemp), and chia seed are preferable from the viewpoint of further enhancing digestibility.

Among the above pulse crops, soy, pea, lentil, chickpea, broad bean, and mung bean are preferable, soy, pea, broad bean, and mung bean are more preferable, soy, broad bean, and mung bean are still more preferable, and soy is yet more preferable, from the viewpoint of further enhancing the release amount of essential amino acids. Among the above cereal crops, wheat, oat, rice, and corn are preferable, wheat, oat, and corn are more preferable, oat and corn are still more preferable, and corn is yet more preferable, from the viewpoint of further enhancing the release amount of essential amino acids. Among the above seeds, almond and hemp seed (industrial hemp) are preferable from the viewpoint of further enhancing the release amount of essential amino acids.

### 2-1-1-2. Other components

The plant protein-containing composition may or may not contain any component as another component in addition to the plant protein. Examples of the other components include components derived from a plant of origin of the plant protein, other food materials, and food additives. Examples of the food additive include a thickener, a binder, a seasoning, a pH adjusting agent, a buffer, a coloring agent, and a flavor.

### 2-1-1-3. Properties

The properties of the plant protein-containing composition may be either a textured form or an untextured form.

### Textured plant protein-containing composition

The textured plant protein-containing composition contains a textured plant protein material, which is a food material commonly known as a substitute meat (pseudo meat). Typical examples of the textured plant protein material include a material obtained by extruding a raw material mixture containing a plant protein and water with an extruder or the like, and drying or freezing the extruded raw material mixture to be textured into a meat-like material. In the present invention, the "meat" imitated by the textured plant protein material means a muscle of an animal that is edible, and when described as "meat", the "meat" is used in the sense of including not only muscles of mammals and birds but also fish and shellfish.

Examples of the shape of the textured plant protein material include a granular shape and a fibrous shape. Examples of the granular shape include a massive shape having various sizes such as a small grain type (mince), a large grain type, and a block type (the size increases in the order of the small grain type, the large grain type, and the block type); and a flat shape having various sizes such as a flake type, a fillet type, and a slice type (the size increases in the order of the flake type, the fillet type, and the slice type).

Examples of the massive shape include a shape in which the longest value among sizes in three directions is about 1 to 3.7 times, preferably about 1 to 3.6 times the shortest value when expressed in a size defined by an orthogonal triaxial system (It refers to three directions of length, width, and thickness. The maximum diameter direction of the granular shape is set to coincide with at least one of the directions.); and examples of the flat shape include a shape in which the longest value among the sizes in the three directions is about 4 times or more, preferably about 4.5 times or more, more preferably about 4.8 times or more the shortest value.

As a specific size of the small grain type (mince) among the massive shapes, the longest value among the three directions (that is, the maximum diameter of the granular shape) is about 8 mm or less, preferably 7.5 mm or less; as a specific size of the large grain type, the longest value is more than 8 mm and 13 mm or less, preferably more than 9 mm and 12 mm or less; and as a specific size of the block type, the longest value is more than 13 mm, preferably more than 14 mm, more than 16 mm, or more than 18 mm. As a specific size of the flake type among the flat shapes, the longest value among the three directions (that is, the maximum diameter of the flat shape) is about 15 mm or less, preferably 12 mm or less; as a specific size of the fillet type, the longest value is more than 15 mm and 40 mm or less, preferably more than 20 mm and 35 mm or less; and as a specific size of the slice type, the longest value is more than 40 mm, preferably more than 45 mm.

More specific examples of the textured plant protein material include a granular plant protein and a fibrous plant protein. The granular plant protein and the fibrous plant protein both refer to those defined in the "Japanese Agricultural Standards for Plant Proteins". However, the textured plant protein material used in the present invention is not limited to the granular plant protein and the fibrous plant protein defined above as long as it is a material textured into a meat-like material as described above.

Regarding the textured plant protein material that can be used in the present invention, the type of plant protein, the characteristics other than the content ratio of plant protein (e.g., properties, moisture content, grain size, product temperature, raw materials other than food additives, food additives, chewiness, water retainability, foreign matters, content amount), and the measurement method thereof can conform to the characteristics and the measurement method defined in the "Japanese Agricultural Standards for Plant Proteins".

The content (a weight in a dry state of the textured plant protein material is used as a reference) of the plant protein contained in the textured plant protein material is not particularly limited, but examples thereof include 20 wt% or more, 25 wt% or more, and 30 wt% or more. From the viewpoint of further enhancing digestibility of the protein, the content is preferably 35 wt% or more, more preferably 40 wt% or more, still more preferably 45 wt% or more, yet more preferably 50 wt% or more. The upper limit of the content range is not particularly limited, but examples thereof include 90 wt% or less, preferably 80 wt% or less, more preferably 70 wt% or less, still more preferably 60 wt% or less.

### Untextured plant protein-containing composition

More specific examples of the properties of the untextured plant protein-containing composition include a liquid form, a slurry form, and a paste form, and a liquid form is preferable.

Specific examples of the untextured plant protein-containing composition include a so-called plant substitute milk (also referred to as a plant milk), and a liquid protein-containing composition (plant protein liquid) containing a plant protein material (it refers to a material obtained by extracting and/or purifying a plant protein, which is usually provided in a powdered form) and water.

The protein content in the untextured plant protein-containing composition is not particularly limited, but examples thereof include 0.05 to 30 wt%, 0.1 to 25 wt%, and 0.5 to 20 wt%, preferably 1 to 15 wt% and 2 to 10 wt%, more preferably 3 to 8 wt% and 4 to 6 wt%. When the untextured plant protein-containing composition is a liquid protein-containing composition (plant protein liquid) containing a plant protein material and water, the content of the plant protein material in the untextured plant protein-containing composition is, for example, 0.1 to 30 wt% or 0.5 to 20 wt%, preferably 1 to 15 wt% or 2 to 10 wt%, more preferably 3 to 8 wt% or 4 to 6 wt%.

The untextured plant protein-containing composition may be one obtained by subjecting the above plant milk or plant protein liquid to an optional treatment other than a treatment for completely decomposing a protein into amino acids and a treatment with a protein deamidase, or may be one obtained by not subjecting the above plant milk or plant protein liquid to the optional treatment. Examples of the optional treatment include fermentation (e.g., lactic acid fermentation), and specific examples of the untextured plant protein-containing composition obtained by such a treatment include a substitute yogurt.

### 2-1-2. Use amount of protein deamidase

The amount of the protein deamidase to be used for the plant protein-containing composition is not particularly limited, but examples of the use amount per 1 g of the plant protein contained in the plant protein-containing composition include 0.01 U or more.

When the plant protein-containing composition is in a textured form, examples of a suitable use amount of the protein deamidase include 0.01 to 1000 U, 0.05 to 500 U, and 0.1 to 100 U as the amount of the protein deamidase per 1 g of the plant protein contained in the plant protein-containing composition, and from the viewpoint of further enhancing digestibility of the protein, the suitable use amount is preferably 0.5 to 50 U, more preferably 1 to 40 U, still more preferably 1.5 to 30 U, yet more preferably 2 to 22 U. The lower limit of the above range may be 3 U, 5 U, 7 U, 13 U, 15 U, or 17 U, and the upper limit of the above range may be 18 U, 16 U, 14 U, 8 U, or 6 U.

When the plant protein-containing composition is in a textured form, examples of the amount of the protein deamidase per 1 g (dry weight) of the textured plant protein material include 0.01 to 1000 U, 0.05 to 500 U, and 0.08 to 200 U, and from the viewpoint of further enhancing digestibility of the protein, the amount is preferably 0.1 to 100 U or 0.15 to 50 U, more preferably 0.2 to 20 U, still more preferably 0.8 to 12 U. The lower limit of the above range may be 6 U, 10 U, 14 U, 26 U, 30 U, or 34 U, and the upper limit of the above range may be 36 U, 32 U, 28 U, or 16 U.

When the plant protein-containing composition is in an untextured form, examples of a suitable use amount of the protein deamidase include 0.25 U or more per 1 g of the plant protein contained in the plant protein-containing composition, and from the viewpoint of further enhancing digestibility of the protein and/or the release amount of essential amino acids, the use amount of the protein deamidase per 1 g of the plant protein contained in the plant protein-containing composition is preferably 0.5 U or more, more preferably 0.75 U or more, still more preferably 1 U or more, 1.2 U or more, 1.5 U or more, 1.8 U or more, or 2 U or more. The upper limit of the use amount range of the protein deamidase per 1 g of the plant protein contained in the plant protein-containing composition is not particularly limited, but examples thereof include 2000 U or less, 1500 U or less, 1300 U or less, 1000 U or less, 850 U or less, 500 U or less, 450 U or less, 250 U or less, 100 U or less, 75 U or less, or 55 U or less.

When the plant protein-containing composition is in an untextured form, and when the plant protein-containing composition is a liquid protein-containing composition (plant protein liquid) containing a plant protein material and water, the use amount per 1 g (dry weight) of the plant protein material contained in the plant protein-containing composition is, for example, 0.01 U or more, 0.1 U or more, or 0.25 U or more. From the viewpoint of further enhancing digestibility of the protein and/or the release amount of essential amino acids, the use amount of the protein deamidase per 1 g (dry weight) of the plant protein material contained in the plant protein-containing composition is preferably 0.5 U or more, more preferably 0.75 U or more, still more preferably 1.25 U or more, 1.5 U or more, yet more preferably 2 U or more or 2.25 U or more. The upper limit of the use amount range of the protein deamidase per 1 g (dry weight) of the plant protein material contained in the plant protein-containing composition is not particularly limited, but examples thereof include 500 U or less, 250 U or less, 100 U or less, 75 U or less, 50 U or less, 25 U or less, 10 U or less, 5 U or less, 3.75 U or less, or 2.75 U or less.

For activity of the protein deamidase, the amount of enzyme liberating 1 µmol of ammonia per minute using benzyloxycarbonyl-L-glutaminylglycine (Z-Gln-Gly) as a substrate is defined as 1 unit (1 U).

### 2-1-3. Reaction operation and treatment conditions

The method for preparing the plant protein mixture is not particularly limited. When the plant protein-containing composition contained in the plant protein mixture is in a textured form, the method for preparing the plant protein mixture may be, for example, a method for swelling a dried product of a textured plant protein material with an aqueous solution containing a protein deamidase, or a method for swelling a dried product of a textured plant protein material with water and then mixing the swollen dried product with an aqueous solution containing a protein deamidase. Preferably, a method for swelling a dried product of the textured plant protein material with an aqueous solution containing a protein deamidase is exemplified. When the plant protein-containing composition contained in the plant protein mixture is in an untextured form, a plant milk or a plant protein liquid and a protein deamidase may be mixed.

The treatment conditions (temperature, time, pH, etc.) of the plant protein mixture are not particularly limited as long as the effect of the present invention can be obtained.

When the plant protein-containing composition contained in the plant protein mixture is in a textured form, the treatment temperature is, for example, 4 to 80°C, preferably 8 to 70°C. The lower limit of the temperature range may be 15°C, 30°C, 45°C, or 55°C, and the upper limit of the temperature range may be 65°C, 50°C, 40°C, or 20°C. The treatment time is not particularly limited, but examples thereof include 0.1 to 18 hours, preferably 0.5 to 15 hours.

When the plant protein-containing composition contained in the plant protein mixture is in an untextured form, the treatment temperature is, for example, 10 to 80°C, preferably 20 to 70°C, more preferably 40 to 60°C, still more preferably 45 to 55°C. The treatment pH (25°C) is, for example, 5 to 10, preferably 5 to 8, more preferably 6 to 8. The treatment time is, for example, 1 to 48 hours, preferably 1 to 24 hours, more preferably 8 to 20 hours or 10 to 18 hours.

These treatment conditions are appropriately selected according to the optimum temperature of an enzyme to be used and/or the degree of the required effect (enhancement in digestibility, or enhancement in digestibility, enhancement in the release amount of essential amino acids, and/or enhancement in the release amount of branched amino acids) of the present invention. Optimum treatment conditions may be determined through a preliminary experiment.

### 2-2. Other steps

The method for enhancing digestibility of a plant protein-containing composition, and the like of the present invention may or may not include a step other than the above step of allowing a protein deamidase to act. Examples of the other steps include a step of preparing a plant protein-containing composition, a step of deactivating an enzyme, a cooling step, and a filtration step. These other steps may be performed singly or in combination of two or more steps.

The step of preparing a plant protein-containing composition can be performed by any method for preparing a plant protein-containing composition.

For example, when a plant substitute milk (plant milk) is used as the plant protein-containing composition, the plant protein-containing composition can be prepared by any method for preparing a plant substitute milk according to the type of a plant from which the plant protein is derived. When a liquid protein-containing composition (plant protein liquid) containing a plant protein material and water is used as the plant protein-containing composition, the plant protein-containing composition can be prepared by dissolving or dispersing a plant protein material in water. In the step of preparing a plant protein-containing composition, blending an optional food additive such as a seasoning, a pH adjusting agent, a buffer, a coloring agent, or a flavor, and/or an optional treatment (e.g., fermentation treatment such as lactic acid fermentation) other than the treatment for completely decomposing a protein into amino acids and the treatment with a protein deamidase may or may not be further performed.

### 3. Method for producing processed plant protein-containing composition having enhanced protein digestibility

The present invention also provides a method for producing a processed plant protein-containing composition having enhanced protein digestibility, the method including a step of allowing a protein deamidase to act on a plant protein-containing composition.

The processed plant protein-containing composition having enhanced protein digestibility obtained by the production method of the present invention may further have an enhanced release amount of essential amino acids and/or an enhanced release amount of branched amino acids.

In the method for producing a processed plant protein-containing composition having enhanced protein digestibility of the present invention, the "enhancement in digestibility", the "enhancement in the release amount of essential amino acids", the "enhancement in the release amount of branched amino acids", and the "protein deamidase" are as described in detail in the above "1. Digestibility enhancer for plant protein-containing composition", and the "step of allowing a protein deamidase to act on a plant protein-containing composition" is as described in detail in the above "2. Method for enhancing digestibility of plant protein-containing composition, method for enhancing release amount of essential amino acids, and method for enhancing release amount of branched amino acids".

The production method of the present invention may or may not include a step other than the step of allowing a protein deamidase to act on a plant protein-containing composition. In the "Other steps", in addition to those described in detail in the above "2. Method for enhancing digestibility of plant protein-containing composition, method for enhancing release amount of essential amino acids, and method for enhancing release amount of branched amino acids", an optional cooking step for obtaining a final food and drink form of a processed plant protein-containing composition to be produced can be performed.

As an example of the cooking step, for example, in the case of using a textured form as the plant protein-containing composition, the mixture after being treated with a protein deamidase is molded into a shape suitable for a desired form, and heat-cooked as necessary, whereby a processed plant protein-containing composition (food) can be obtained. The method for heat-cooking can be appropriately determined by those skilled in the art according to the type of a food. Specific examples of the method for heat-cooking include boiling, baking (roasting, toasting, baking, grilling, broiling), steaming, and frying. These methods for heat-cooking may be used singly or in combination of two or more kinds thereof.

### 4. Processed plant protein-containing composition having enhanced protein digestibility

The present invention also provides a processed plant protein-containing composition having enhanced protein digestibility, which is obtained by a method including a step of allowing a protein deamidase to act on a plant protein-containing composition.

The processed plant protein-containing composition of the present invention is a composition processed to enhance protein digestibility by a protein deamidase. In addition to being processed to have enhanced protein digestibility, the processed plant protein-containing composition of the present invention may be further processed to have an enhanced release amount of essential amino acids and/or an enhanced release amount of branched amino acids.

In the processed plant protein-containing composition having enhanced protein digestibility of the present invention, the "enhancement in digestibility", the "enhancement in the release amount of essential amino acids", the "enhancement in the release amount of branched amino acids", and the "protein deamidase" are as described in detail in the above "1. Digestibility enhancer for plant protein-containing composition", and the "method including a step of allowing a protein deamidase to act on a plant protein-containing composition" is as described in detail in the above "2. Method for enhancing digestibility of plant protein-containing composition, method for enhancing release amount of essential amino acids, and method for enhancing release amount of branched amino acids" and "3. Method for producing processed plant protein-containing composition having enhanced protein digestibility".

The specific form of the processed plant protein-containing composition having enhanced protein digestibility of the present invention can be selected from any food and drink form.

In the case of using a textured form as the plant protein-containing composition of the material, the form can conform to a livestock meat, chicken meat, and/or minced fish processed food. That is, examples of the processed plant protein-containing composition of the present invention include a meat-like processed food (it refers to a food imitating a livestock meat, chicken meat, and/or minced fish processed food). More preferably, examples of the processed plant protein-containing composition of the present invention include a livestock meat and/or chicken meat-like processed food (it refers to a food imitating a livestock meat and/or chicken meat processed food). Such a livestock meat and/or chicken meat processed food may be any food that is cooked by molding and heating a meat type using livestock meat and/or chicken meat, and specific examples thereof include hamburg steak, meatball, patty, meat loaf, minced cutlet, and dim sum.

When an untextured plant protein-containing composition is used as the plant protein-containing composition of the material, examples of the specific form of the processed plant protein-containing composition of the present invention include a plant substitute milk, a substitute yogurt, a substitute cheese, and a substitute ice cream, and preferably include a plant substitute milk and a substitute yogurt.

### EXAMPLES

Hereinafter, the present invention will be specifically described with reference to Examples, but the present invention is not to be construed as being limited to the following Examples.

### [A. Plant protein-containing composition]

### [A-1. Textured plant protein-containing composition]

The textured plant protein materials shown in Table 1 were used.

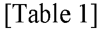

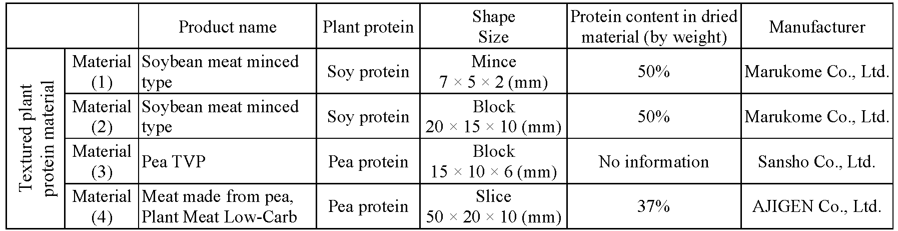

### [A-2. Untextured plant protein-containing composition]

As a plant protein-containing composition, a plant protein liquid prepared by mixing the plant protein materials (powders) shown in Table 2 in a phosphate buffer pH 7.0 (25°C) so as to be 5 wt%, or the commercially available plant milks shown in Table 3 were used. As an animal protein-containing composition for comparison, the cow milk shown in Table 3 was used.

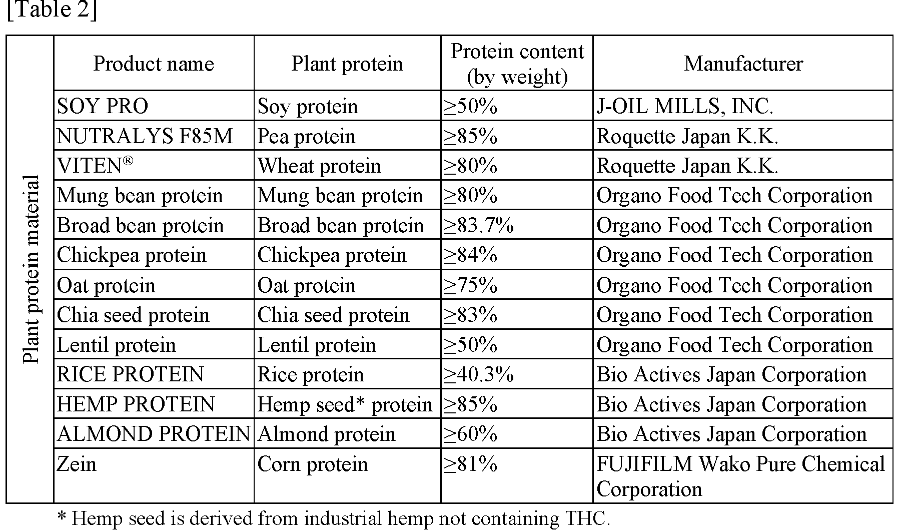

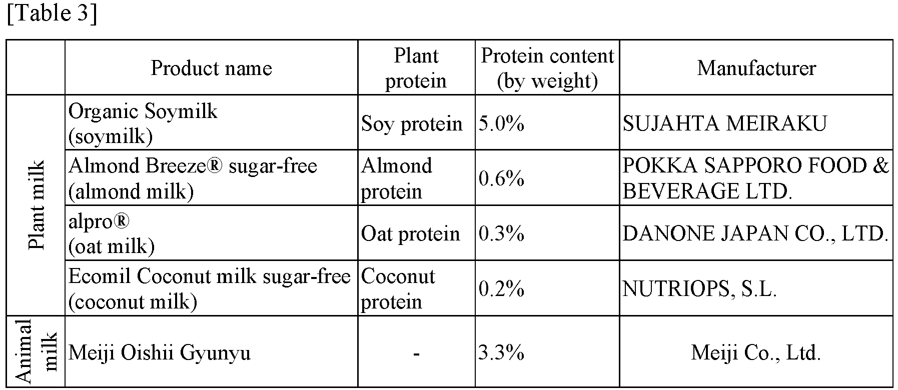

### [B. Protein deamidase]

As a protein deamidase, Protein Glutaminase "Amano" 500; protein glutaminase derived from Chryseobacterium proteolyticum (manufactured by Amano Enzyme Inc.) was used. Hereinafter, this protein deamidase is also referred to as

### "PG".

A protein deamidase activity value was measured by the following method.

0.1 mL of a sample solution containing a protein deamidase was added to 1 mL of a 0.2 M phosphate buffer (pH 6.5) containing 30 mM Z-Gln-Gly, and the mixture was allowed to stand at 37°C for 10 minutes, and then 1 mL of a 0.4 M TCA solution was added to stop the reaction. As a blank, 1 mL of a 0.4 M TCA test solution was added to 1 mL of a 0.2 M phosphate buffer (pH 6.5) containing 30 mM Z-Gln-Gly, 0.1 mL of a sample solution containing a protein deamidase was further added, and the mixture was allowed to stand at 37°C for 10 minutes.

The amount of ammonia generated in the reaction solution was measured using Ammonia Test Wako (FUJIFILM Wako Pure Chemical Corporation). The ammonia concentration in the reaction solution was determined from a calibration curve representing the relationship between the ammonia concentration and the absorbance (630 nm) prepared using an ammonia standard solution (ammonium chloride).

The activity of the protein deamidase was calculated from the following formula using the amount of enzyme that produces 1 µmol of ammonia per minute as 1 unit (1 U). In the formula, the amount of the reaction solution is 2.1, the amount of the enzyme solution is 0.1, and Df is a dilution rate of the enzyme solution. Further, 17.03 is a molecular weight of ammonia. Protein deamidase activity (U/mL) = Ammonia concentration in reaction solution (mg.L) × (1/17.03) × (amount of reaction solution/amount of enzyne solution) × (1/10) × Df

### [C. Production of processed plant protein-containing composition having enhanced digestibility]

### [C-1. Use of textured plant protein-containing composition]

A PG aqueous solution having a weight of 6 times that of the textured plant protein material (dried material) shown in the above [A-1. Textured plant protein-containing composition] was added to 10 g of the textured plant protein material, and the textured plant protein material was left to stand at 60°C for 60 minutes to be swollen, and washed with water. The moisture was removed, and the swollen textured plant protein material was weighed by 25 g to obtain a processed plant protein-containing composition (before seasoning).

To the swollen textured plant protein material, 2.75 g of powdered pea protein (NUTRALYS F85M manufactured by Roquette Japan K.K.), 5 mL of water, 5 mL of olive oil, and methyl cellulose (final concentration: 2 wt%) were mixed, and the mixture was molded into a patty shape to obtain a processed plant protein-containing composition (after seasoning, before baking).

The processed plant protein-containing composition (after seasoning, before baking) was baked at 180°C for 10 minutes. As a result, a processed plant protein-containing composition (after baking) in a patty form was obtained, and a part of the processed plant protein-containing composition was subjected to a digestibility test as a PG-treated fraction.

Separately, a patty-shaped processed plant protein-containing composition (after baking) was obtained by performing the same operation except that the above PG treatment was not performed, and a part of the patty-shaped processed plant protein-containing composition was subjected to a digestibility test as a PG-untreated fraction.

### [C-2. Use of untextured plant protein-containing composition]

2.5 U of PG per 1 g of the plant protein material of the plant protein liquid shown in the above [A-2. Untextured plant protein-containing composition] was added, or 2.5 U of PG per 1 g of the commercially available plant milk was added (the pH of the mixture of the plant protein-containing composition and PG at 25°C was about 7), and the mixture was incubated at 50°C overnight to obtain a processed plant protein-containing composition, and a part of the processed plant protein-containing composition was subjected to a digestibility test as a PG-treated fraction.

Separately, a processed plant protein-containing composition was obtained by performing the same operation except that PG was not added to the plant protein liquid or the commercially available plant milk, and a part of the processed plant protein-containing composition was subjected to a digestibility test as a PG-untreated fraction.

For comparison, 2.5 U of PG per 1 g of an animal protein was added to the cow milk shown in the above [A-2. Untextured plant protein-containing composition], and the mixture was incubated at 50°C overnight to obtain a processed cow milk, and a part of the processed cow milk was subjected to a digestibility test as a PG-treated fraction. Separately, a processed cow milk subjected to the same operation except that PG was not added to the cow milk was obtained, and a part of the processed cow milk was subjected to a digestibility test as a PG-untreated fraction.

### [D. Digestibility test]

A digestibility test with reference to the INFOGEST method (Brodkorb et al. 2019 Nat. Protoc) was performed on each of the PG-treated fraction and the PG-untreated fraction.

3.5 mL of artificial saliva and 0.5 mL of 0.77 mg/mL amylase were mixed with 5 g of the PG-treated fraction or the PG-untreated fraction, and the mixture was stirred at 160 rpm for 2 minutes in a water bath at 37°C to obtain an oral digesta model. The composition of the artificial saliva was 0.28 M KCl, 0.07 mM KH₂PO₄, 0.26 mM NaHCO₃, 2.8 mM MgCl₂, 1.1 mM (NH₄)₂CO₃, and 1.5 mM CaCl₂ (pH 7.0).

Next, 7.5 mL of an artificial gastric juice and 1.6 mL of a 0.227 g/19.2 mL pepsin solution (Sigma-Aldrich Co. LLC) were mixed with 10 mL of the oral digesta model, and the mixture was stirred at 160 rpm in a water bath at 37°C for 2 hours to obtain a gastric digesta model. The composition of the artificial gastric juice was 0.10 M KCl, 0.01 M KH₂PO₄, 0.38 M NaHCO₃, 0.71 M NaCl, 1.82 mM MgCl₂, 7.58 mM (NH₄)₂CO₃, and 0.165 mM CaCl₂ (pH 3.0).

Furthermore, 11 mL of an artificial intestinal juice, 16.4 mg/5 mL of a pancreatin solution (Sigma-Aldrich Co. LLC), 215 mg/2.5 mL of sodium taurocholate, and 40 µL of a 0.3 M calcium chloride solution were mixed with 20 mL of the gastric digesta model, and the mixture was stirred at 160 rpm in a water bath at 37°C for 2 hours to obtain a small intestinal digesta model. The composition of the artificial intestinal juice was 8.5 mM KCl, 1 mM KH₂PO₄, 106.3 mM NaHCO₃, 48 mM NaCl, and 0.4 mM MgCl₂ (pH 7.0).

When the textured plant protein material shown in the above [A-1. Textured plant protein-containing composition] was used, further, the residue after the digestion reaction with the artificial gastric juice was dried at 60°C overnight, and then the weight of the residue was measured.

### [E. Measurement of amount of free amino nitrogen]

### [E-1. Measurement of amount of free amino nitrogen]

0.5 mL of a ninhydrin reagent pH 6.7 (10% Na₂HPO₄/12H₂O, 6% KH₂PO₄, 0.50% ninhydrin, 0.30% fructose) was added to 1.0 mL of a diluted solution obtained by appropriately diluting a supernatant of the oral digesta model, the gastric digesta model, or the small intestinal digesta model obtained from each of the PG-treated fraction and the PG-untreated fraction, and the mixture was mixed. Thereafter, the mixture was boiled for 16 minutes, and the amount of free amino nitrogen (mg/L) was measured at an absorbance of 570 nm.

### [E-2. Derivation of ratio of amount of free amino nitrogen]

For each of the oral digesta model, the gastric digesta model, and the small intestinal digesta model, the ratio (free amino nitrogen ratio) of the amount of free amino nitrogen of the digesta model obtained from the PG-treated fraction to the amount of free amino nitrogen of the digesta model obtained from the PG-untreated fraction was derived. It can be determined that the higher the free amino nitrogen ratio in the stomach and/or small intestine is, the better the digestibility is. The ratio of the amount of free amino nitrogen in the PG-treated fraction before digestion to the amount of free amino nitrogen in the PG-untreated fraction before digestion was 1. That is, it was also confirmed that the amount of free amino nitrogen did not increase only by PG treatment.

### [F. Amino acid analysis]

The supernatant of the small intestinal digesta model obtained from the PG-treated fraction was filtered through a filter (0.45 µm) to prepare a sample for amino acid analysis. Separately, a supernatant of the small intestinal digesta model was prepared by performing the same operations of items C. and D. except that PG was not added, and further filtered through a filter (0.45 µm) to prepare a control sample for amino acid analysis. For each of the sample for amino acid analysis and the control sample for amino acid analysis, the amount of free amino acids was analyzed using an amino acid analyzer (amino acid analysis using Agilent 1260 Infinity II LC system) according to the protocol of the analyzer. Specifically, first, free essential amino acids (essential AA) [specifically, branched amino acids (BCAA), aromatic amino acids (AAA), and other essential amino acids] and non-essential amino acids (non-essential AA) were measured. The release amounts of BCAA, AAA, other essential AA, and non-essential AA in the sample for amino acid analysis were derived as relative values when the release amounts of BCAA, AAA, other essential AA, and non-essential AA in the control sample for amino acid analysis were each 1. If the relative value derived by this exceeds 1, it means that the release amount of the amino acid is enhanced by PG treatment.

### [Test Example 1]

A processed plant protein-containing composition (after baking) in a patty form was produced by the method of the above [C-1. Use of textured plant protein-containing composition] using material (1) shown in Table 1 of the above [A-1. Textured plant protein-containing composition]. The amount of PG added per 1 g (dry weight) of the textured plant protein material was 10 U, and the amount of PG added per 1 g of the soy protein was 20 U.

The processed plant protein-containing composition (after baking) was subjected to the test of the above [D. Digestibility test], and the supernatant of the gastric digesta model obtained from each of the PG-treated fraction and the PG-untreated fraction was subjected to the measurement of the above [E-1. Measurement of amount of free amino nitrogen]. The results are shown in Table 4.

**[Table 4]**

| | Free amino nitrogen (mg/L) | Amount of residue (g) |
|---|---|---|
| Comparative Example 1-1 (PG-untreated fraction) | 41.4 | 2.5 |
| Example 1-1 (PG-treated fraction) | 63.9 | 1.57 |

As shown in Table 4, it was confirmed that by subjecting the textured plant protein material to PG treatment, decomposition into free amino acids proceeded in the processed plant protein-containing composition (after baking), and the digestibility was enhanced.

### [Test Example 2]

Production of a processed plant protein-containing composition (after baking) and measurement of the amount of free amino nitrogen in the gastric digesta model were performed in the same manner as in Test Example 1 except that the amount of PG added was changed to the amount shown in Table 5. The results are shown in Table 5.

**[Table 5]**

| | Amount of PG added | | Free amino nitrogen (mg/L) |
|---|---|---|---|
| | Amount per 1 g (dry weight) of textured plant protein material | Amount per 1 g of protein | |
| Comparative Example 1-1 (additional test) | 0 U | 0 U | 46.2 |
| Example 1-2 | 1 U | 2 U | 69.0 |
| Example 1-3 | 2 U | 4 U | 71 |
| Example 1-4 | 5 U | 10 U | 70.9 |
| Example 1-1 (additional test) | 10 U | 20 U | 70.3 |

As shown in Table 5, even when PG was used in any amount, enhancement in digestibility could be confirmed.

### [Test Example 3]

Production of a processed plant protein-containing composition (after baking) and measurement of the amount of free amino nitrogen in the gastric digesta model were performed in the same manner as in Test Example 1 except that materials (1) to (4) shown in Table 1 of the above [A-1. Textured plant protein-containing composition] were used and the amount of PG added was set to the amount shown in Table 6. Furthermore, for the supernatant of the gastric digesta model, the ratio of the amount of free amino nitrogen was also derived based on the above [E-2. Derivation of ratio of amount of free amino nitrogen]. The results are shown in Table 6.

**[Table 6]**

| | Textured plant protein material | | | Amount of PG added | | Free amino nitrogen (mg/L) | Free amino nitrogen ratio |
|---|---|---|---|---|---|---|---|
| | | Origin | Shape Size (mm) | Amount per 1 g (dry weight) of textured plant protein material | Amount per 1 g of protein | | |
| Comparative Example 1-1 (additional test) | Material (1) | Soybean | Mince 7 × 5 × 2 | 0 U | 0 U | 47 | |
| Comparative Example 1-2 | Material (2) | Soybean | Block 20 × 15 × 10 | | | 60.9 | |
| Comparative Example 1-3 | Material (3) | Pea | Block 15 × 10 × 6 | | | 35.6 | |
| Comparative Example 1-4 | Material (4) | Pea | Slice 50 × 20 × 10 | | | 43.5 | |
| Example 1-1 (additional test) | Material (1) | Soybean | Mince 7 × 5 × 2 | 10 U | 20 U | 69.9 | 1.5 |
| Example 1-5 | Material (2) | Soybean | Block 20 × 15 × 10 | | 20 U | 92.2 | 1.5 |
| Example 1-6 | Material (3) | Pea | Block 15 × 10 × 6 | | (Unknown) | 46.4 | 1.3 |
| Example 1-7 | Material (4) | Pea | Slice 50 × 20 × 10 | | 27 U | 57.8 | 1.3 |

As shown in Table 6, regardless of the origin and shape of the textured plant protein material, it could be confirmed that by subjecting the textured plant protein material to PG treatment, decomposition into free amino acids proceeded, and the digestibility was enhanced. In addition, it was confirmed that when the origin of the textured plant protein material is soy, decomposition into free amino acids particularly proceeded, and the digestibility is particularly excellent.

### [Test Example 4]

A processed plant protein-containing composition was produced by the method of the above [C-2. Use of untextured plant protein-containing composition] using the plant protein-containing composition shown in the above [A-2. Untextured plant protein-containing composition]. The obtained processed plant protein-containing composition was subjected to the test of the above [D. Digestibility test], the supernatant of the oral digesta model, the gastric digesta model, or the small intestinal digesta model obtained from each of the PG-treated fraction and the PG-untreated fraction was subjected to the measurement of the above [E-1. Measurement of amount of free amino nitrogen], further, the ratio of the amount of free amino nitrogen based on the above [E-2. Derivation of ratio of amount of free amino nitrogen] was derived, and the relative value of the release amount of the predetermined amino acids based on the above [F. Amino acid analysis] was derived. The results are shown in Tables 7 to 9. In Table 9, the ratio of the amount of essential AA (relative value) to the amount of non-essential AA (relative value) constituting proteins after digestion in the small intestine is also shown. If this ratio exceeds 1, it means that the effect of enhancing the release amount of essential amino acids by PG treatment is superior to that of non-essential amino acids.

**[Table 7]**

| | Plant protein liquid (liquid plant protein-containing composition) | Free amino nitrogen ratio (PG-treated fraction/PG-untreated fraction) | | |
|---|---|---|---|---|
| | | Oral | Gastric | Small intestinal |
| Example 2-1 | Soy protein liquid | 1 | 1.3 | 1.34 |
| Example 2-2 | Pea protein liquid | 1 | 1.3 | 1.31 |
| Example 2-3 | Broad bean protein liquid | 1 | 1.36 | 1.36 |
| Example 2-4 | Mung bean protein liquid | 0.99 | 1.97 | 1.97 |
| Example 2-5 | Chickpea protein liquid | 1 | 1.61 | 1.64 |
| Example 2-6 | Lentil protein liquid | 0.98 | 1.31 | 1.31 |
| Example 2-7 | Wheat protein liquid | 1 | 6.79 | 6.83 |
| Example 2-8 | Corn protein liquid | 0.99 | 3.77 | 3.87 |
| Example 2-9 | Oat protein liquid | 0.98 | 1.69 | 1.72 |
| Example 2-10 | Rice protein liquid | 1.01 | 2.31 | 2.4 |
| Example 2-11 | Almond protein liquid | 0.99 | 1.64 | 1.61 |
| Example 2-12 | Chia seed protein liquid | 1 | 1.79 | 1.83 |
| Example 2-13 | Hemp protein liquid | 1 | 1.74 | 1.71 |

**[Table 8]**

| | Commercially available milk | Free amino nitrogen ratio (PG-treated fraction/PG-untreated fraction) | | |
|---|---|---|---|---|
| | | Oral | Gastric | Small intestinal |
| Example 2-14 | Soymilk | 0.93 | 1.62 | 1.57 |
| Example 2-15 | Almond milk | 1.03 | 1.76 | 1.78 |
| Example 2-16 | Oat milk | 1.17 | 1.58 | 1.54 |
| Example 2-17 | Coconut milk | 1.05 | 1.47 | 1.58 |
| Comparative | Cow milk | 1.1 | 1.08 | 1.02 |
| Example 2-1 | | | | |

**[Table 9]**

| | Protein liquid (liquid protein-containing composition) | After PG treatment | | | | |
|---|---|---|---|---|---|---|
| | | Essential AA | | | Non-essential AA | Essential AA |
| | | BCAA | AAA | Other | | Non-essential AA |
| Example 2-1 | Soy protein liquid | 3.43 | 3.53 | 4.18 | 1.90 | 1.95 |
| Example 2-2 | Pea protein liquid | 3.00 | 3.83 | 3.35 | 1.85 | 1.83 |
| Example 2-3 | Broad bean protein liquid | 3.87 | 3.83 | 4.93 | 2.01 | 2.09 |
| Example 2-4 | Mung bean protein liquid | 3.50 | 4.90 | 6.03 | 2.66 | 1.81 |
| Example 2-5 | Chickpea protein liquid | 3.83 | 3.90 | 6.08 | 1.84 | 2.50 |
| Example 2-6 | Lentil protein liquid | 3.23 | 5.97 | 2.23 | 1.71 | 2.23 |
| Example 2-7 | Wheat protein liquid | 2.20 | 3.70 | 3.25 | 2.92 | 1.04 |
| Example 2-8 | Corn protein liquid | 3.90 | 2.90 | 3.78 | 1.65 | 2.14 |
| Example 2-9 | Oat protein liquid | 3.23 | 4.17 | 4.73 | 2.14 | 1.89 |
| Example 2-10 | Rice protein liquid | 3.50 | 3.60 | 7.85 | 3.56 | 1.40 |
| Example 2-11 | Almond protein liquid | 4.27 | 4.03 | 3.08 | 1.61 | 2.36 |
| Example 2-13 | Hemp protein liquid | 1.43 | 3.07 | 2.15 | 1.65 | 1.34 |
| Comparative Example 2-1 | Cow milk | 1.27 | 1.00 | 1.36 | 1.54 | 0.79 |

As shown in Table 7 and Table 8, it was shown that the digestibility in the stomach and the small intestine was enhanced by PG treatment of the plant protein-containing composition (Examples 2-1 to 2-17). This effect of enhancing digestibility was also remarkable as compared with the cow milk (Comparative Example 2-1), which is an animal protein-containing composition.

Furthermore, as shown in Table 9, PG treatment of the plant protein-containing composition enhanced the release amounts of all of BCAA, AAA, other essential AA, and non-essential AA among the amino acids released after digestion (Examples 2-1 to 2-11 and 2-13). Furthermore, since the ratio of essential AA to non-essential AA was also enhanced, it was shown that the effect of enhancing the release amount of essential amino acids such as BCAA was further enhanced than the effect of enhancing the release amount of non-essential amino acids (Examples 2-1 to 2-11 and 2-13). Conversely, in the cow milk (Comparative Example 2-1), which is an animal protein-containing composition, the ratio of essential AA to non-essential AA was below 1, indicating that PG treatment rather enhanced the release amount of non-essential amino acids.

## Claims

1. A digestibility enhancer for a plant protein-containing composition, the digestibility enhancer comprising a protein deamidase.

2. The digestibility enhancer for a plant protein-containing composition according to claim 1, which is used for enhancing a release amount of essential amino acids.

3. The digestibility enhancer for a plant protein-containing composition according to claim 1, which is used for enhancing a release amount of branched amino acids.

4. The digestibility enhancer for a plant protein-containing composition according to claim 1, wherein the protein deamidase is a protein glutaminase.

5. The digestibility enhancer for a plant protein-containing composition according to claim 1, wherein the plant protein is a protein of a plant selected from the group consisting of pulse crops, cereal crops, and seeds.

6. A method for enhancing digestibility of a plant protein-containing composition, the method comprising a step of allowing a protein deamidase to act on a plant protein-containing composition.

7. A method for enhancing a release amount of essential amino acids of a plant protein-containing composition, the method comprising a step of allowing a protein deamidase to act on a plant protein-containing composition.

8. A method for enhancing a release amount of branched amino acids of a plant protein-containing composition, the method comprising a step of allowing a protein deamidase to act on a plant protein-containing composition.

9. A method for producing a processed plant protein-containing composition having enhanced protein digestibility, the method comprising a step of allowing a protein deamidase to act on a plant protein-containing composition.

10. A processed plant protein-containing composition having enhanced protein digestibility, which is obtained by a method comprising a step of allowing a protein deamidase to act on a plant protein-containing composition.
